# EUROPÄISCHE PATENTANMELDUNG

(11) **EP 2 468 587 A2**
(43) Veröffentlichungstag der Anmeldung: **27.06.2012**
(21) Anmeldenummer: 11188833.5
(22) Anmeldetag: 11.11.2011
(51) Int. Cl.: B60S 1/04

(54) **Scheibenwisch-Gestängeeinrichtung, Herstellungsverfahren dafür sowie Scheibenwischvorrichtung und Wischeranlage**

(30) Priorität: 23.12.2010 DE 102010064018
(71) Anmelder: Robert Bosch GmbH, 70442 Stuttgart (DE)
(72) Erfinder: Kraus, Achim, 77815 Buehl (DE)

(57) **Zusammenfassung**

Die Erfindung betrifft eine Scheibenwisch-Gestängeeinrichtung (2) für eine Scheibenwischvorrichtung oder eine Wischeranlage eines Fortbewegungsmittels, insbesondere eines Kraftfahrzeugs, mit zwei Wischerkomponenten (30; 20, 40), wobei die zwei Wischerkomponenten (30; 20, 40) der Scheibenwisch-Gestängeeinrichtung (2) im Wesentlichen formschlüssig mittels einer Magnetpulscrimpung aneinander festgelegt sind.

Ferner betrifft die Erfindung ein Verfahren zum Herstellen einer Scheibenwisch-Gestängeeinrichtung (2) für eine Scheibenwischvorrichtung oder eine Wischeranlage eines Fortbewegungsmittels, insbesondere eines Kraftfahrzeugs, mit zwei Wischerkomponenten (30; 20, 40), wobei die zwei Wischerkomponenten (30; 20, 40) der Scheibenwisch-Gestängeeinrichtung (2) im Wesentlichen formschlüssig durch Magnetpulscrimpen aneinander festgelegt werden.

Des Weiteren betrifft die Erfindung eine Scheibenwischvorrichtung oder eine Wischeranlage für ein Fortbewegungsmittel, insbesondere für eine Windschutzscheibe eines Kraftfahrzeugs, wobei eine Scheibenwisch-Gestängeeinrichtung (2) der Scheibenwischvorrichtung oder der Wischeranlage (1) erfindungsgemäß ausgebildet oder erfindungsgemäß hergestellt ist.

## Beschreibung

Die Erfindung betrifft eine Scheibenwisch-Gestängeeinrichtung und ein Verfahren zum Herstellen einer Scheibenwisch-Gestängeeinrichtung, für eine Scheibenwischvorrichtung oder eine Wischeranlage eines Fortbewegungsmittels, insbesondere eines Kraftfahrzeugs. Ferner betrifft die Erfindung eine Scheibenwischvorrichtung oder eine Wischeranlage insbesondere für eine Windschutzscheibe eines Kraftfahrzeugs, mit einer erfindungsgemäßen Scheibenwisch-Gestängeeinrichtung bzw. einer erfindungsgemäß hergestellten Scheibenwisch-Gestängeeinrichtung.

### Stand der Technik

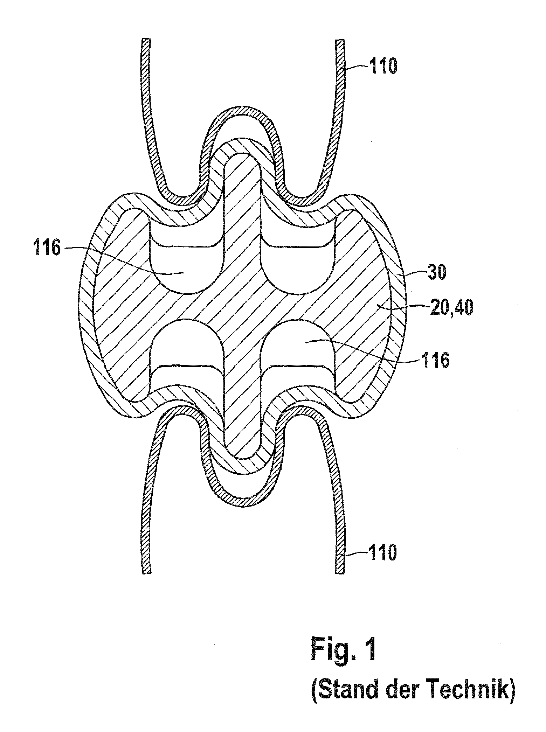

Eine Vielzahl von Gestängeeinrichtungen für Scheibenwischvorrichtungen oder deren Wischeranlagen besitzen ein Trägerrohr für eine Lagereinrichtung, ein Übertragungsgestänge und/oder einen Antriebsmotor. Hierbei können die Lagereinrichtungen und ein Gehäuse des Antriebsmotors bevorzugt aus einem Aluminium-Werkstoff und das Trägerrohr meist aus einem Stahl-Werkstoff hergestellt sein. Eine mechanische Verbindung innerhalb der Scheibenwisch-Gestängeeinrichtung zwischen dem Trägerrohr und z. B. einem Montagezapfen beispielsweise einer Lagereinrichtung erfolgt im Stand der Technik mittels einer weggesteuerten, mechanischen Crimpung - siehe hierzu auch Fig. 1 der Zeichnung -, wobei das Trägerrohr auf/in im Montagezapfen der Lagereinrichtung vorgesehene Crimpkerben gecrimpt wird. Hierbei bildet sich eine feste Verbindung zwischen dem Trägerrohr und dem Montagezapfen aus.

Solche in Fig. 1 dargestellte Crimpkerben 116 benötigen enge Toleranzen, um später eine ordnungsgemäße weggesteuerte, mechanische Crimpung mittels eines Crimpstempels 110 sicherzustellen. Die engen Toleranzen der Crimpkerben 116 machen die Crimpung vergleichsweise teuer. Beim Crimpen ist darauf zu achten, dass die Crimpstempel 110 genau zu den Crimpkerben 116 in einem inneren Formabschnitt (Crimpstutzen, Montagezapfen) einer Wischerkomponente 20, 40 ausgerichtet sind, weil ansonsten die mechanischen Belastungen in beiden Wischerkomponenten 30; 20, 40 beim Umformprozess zu groß werden können. Dies kann zu Rissen im äußeren Rohrabschnitt der Wischerkomponente 30 bzw. zu einer Beschädigung des inneren Formabschnitts der Wischerkomponente 20, 40 führen. Die beim Crimpen mittels Crimpstempel 110 auftretenden mechanischen Kräfte sind sehr hoch, was negative Auswirkungen auf eine zurückbleibende Verformung in den Wischerkomponenten 30; 20, 40 und eine Größe der verwendeten Crimpwerkzeuge hat. Aufgrund einer hohen Varianz der unterschiedlichen Applikationen bedarf es dafür zudem einer komplexen mehrachseigen Maschinentechnik.

### Aufgabenstellung

Es ist eine Aufgabe der Erfindung, eine verbesserte Gestängeeinrichtung für eine Scheibenwischvorrichtung bzw. eine Wischeranlage eines Fortbewegungsmittels, insbesondere eines Kraftfahrzeugs, anzugeben. Eine mechanische Verbindung zwischen zwei Wischerkomponenten der Gestängeeinrichtung soll dabei einfach aufgebaut sein und bei kleinen Abmessungen robust und kostengünstig eingerichtet werden können. Hierbei soll gemäß der Erfindung auf ein teures mechanisches Verfahren, d. h. ein weggesteuertes Verfahren, wie z. B. ein mechanisches Crimpverfahren, verzichtet werden können. Dies betrifft insbesondere die mechanische Verbindung zwischen einem Trägerrohr und einer Lagereinrichtung und/oder einem Antriebsmotor der Scheibenwischvorrichtung bzw. der Wischeranlage.

### Offenbarung der Erfindung

Die Aufgabe der Erfindung wird mittels einer Scheibenwisch-Gestängeeinrichtung und durch ein Verfahren zum Herstellen einer Scheibenwisch-Gestängeeinrichtung für eine Scheibenwischvorrichtung oder eine Wischeranlage eines Fortbewegungsmittels, insbesondere eines Kraftfahrzeugs, gemäß Anspruch 1 bzw. Anspruch 2; und eine Scheibenwischvorrichtung oder eine Wischeranlage, insbesondere für eine Windschutzscheibe eines Kraftfahrzeugs, gemäß Anspruch 11 gelöst. Vorteilhafte Weiterbildungen der Erfindung ergeben sich aus den abhängigen Ansprüchen.

Die erfindungsgemäße Scheibenwisch-Gestängeeinrichtung weist wenigstens zwei Wischerkomponenten auf, wobei die wenigstens zwei Wischerkomponenten formschlüssig mittels einer Magnetpulscrimpung miteinander verpresst bzw. aneinander festgelegt sind. Bei dem erfindungsgemäßen Verfahren werden die wenigstens zwei Wischerkomponenten der Scheibenwisch-Gestängeeinrichtung ebenfalls formschlüssig durch Magnetpulscrimpen bzw. durch ein Verfahren zum Magnetpulscrimpen miteinander verpresst bzw. aneinander festgelegt.

Hierbei kann eine Wischerkomponente eine Lagereinrichtung, insbesondere ein Wischerlager, eine Schubstangen-Lagereinrichtung; ein Trägerrohr; ein elektrischer Antriebsmotor, ggf. mit einem Getriebe; ein Gehäuse oder eine Montagevorrichtung, insbesondere eine Montagehülse sein. Aber auch andere Wischerkomponenten sind gemäß der Erfindung anwendbar. So kann z. B. auch eine Schubstange oder eine Koppelschwinge angewendet werden, falls dies eine Konstruktion der Scheibenwisch-Gestängeeinrichtung erlaubt.

Gemäß der Erfindung werden wenigstens zwei Wischerkomponenten durch Magnetpulsumformen bzw. Magnetpulscrimpen miteinander zumindest abschnittsweise formschlüssig verbunden. Hierbei tritt ferner zusätzlich meist ein Reib- bzw. ein Kraftschluss auf. Es kann also auf ein teures mechanisches Verfahren, wie z. B. das weggesteuerte Crimpverfahren, verzichtet werden. Stattdessen wird ein elektrisches bzw. stromgesteuertes Umformverfahren angewendet, um die wenigstens zwei Wischerkomponenten aneinander dauerhaft festzulegen.

Die mechanische Verbindung kann dabei kraftlos auf das Gestänge abseits der Verbindungsstelle der beiden Wischerkomponenten und örtlich flexibel, auch bei größeren und sogar größten Toleranzen, eingerichtet werden. Durch die berührungslose Umformung bzw. das berührungslose Crimpen sind keine mechanischen Crimpwerkzeuge notwendig, die genau ausgerichtet werden müssen. Bei der erfindungemäßen Crimpung werden die Wischerkomponenten gleichmäßig belastet, da keine Stauchung durch einen Stempeldruck erfolgt. Dies minimiert eine Komplexität einer Prozessführung signifikant, wobei auf die aufwändige Technik der Crimpmaschinen verzichtet werden kann.

Gemäß der Erfindung weist die eine Wischerkomponente bevorzugt einen Crimpformabschnitt und die andere Wischerkomponente einen Rohrabschnitt auf. Der Rohrabschnitt der einen Wischerkomponente ist dabei auf den Crimpformabschnitt der anderen Wischerkomponente gesteckt, wobei der Rohrabschnitt mittels der Magnetpulscrimpung auf den Crimpformabschnitt gecrimpt ist bzw. durch Magnetpulscrimpen auf den Crimpformabschnitt gecrimpt wird. Ein Verbindungsbereich der wenigstens zwei Wischerkomponenten kann dabei im Wesentlichen eine zylindrische, eine quaderförmige oder eine konusartige Form aufweisen. Andere Formen sind dabei natürlich ebenfalls anwendbar.

In Ausführungsformen der Erfindung ist ein einzelner oder sind mehrere oder im Wesentlichen alle Querschnitte einer einzelnen Crimpausnehmung des Crimpformabschnitts derart ausgestaltet, dass diese im Wesentlichen radial von innen nach außen verlaufen, sich in Radialrichtung von innen nach außen aufweiten, keine parallelen Begrenzungslinien besitzen, in einer beliebigen Umfangs- und/oder Radialrichtung hinterschneidungsfrei ausgebildet sind, im Wesentlichen wenigstens teilweise segment- und/oder sektorförmig sind, und/oder untereinander identisch sind, wobei sich ihre Lage in einer Längserstreckung des Crimpformabschnitts bevorzugt nicht ändert.

In Übertragung auf einen einzelnen, mehrere oder im Wesentlichen alle Querschnitte des Crimpformabschnitts in einem formschlüssigen Verbindungsbereich heißt das u. a., dass diese in einer Umfangs- und/ oder Radialrichtung hinterschneidungsfrei ausgebildet sind, wenigstens angenähert stern- oder kreuzförmig aufgebaut sind, die Form eines regelmäßigen oder unregelmäßigen Vielecks besitzen, kreisförmig, ellipsenförmig oder wenigstens teilweise abgerundet ausgebildet sind, im Wesentlichen punkt- und/oder spiegelsymmetrisch bezüglich eines Zentrums des Querschnitts sind, und/oder untereinander identisch sind, wobei sich ihre Lage in der Längserstreckung des Crimpformabschnitts bevorzugt nicht ändert.

Ferner kann eine einzelne, eine Mehrzahl oder alle Crimpausnehmungen wenigstens eines der folgenden Merkmale aufweisen. In Längsrichtung des Crimpformabschnitts ist die betreffende Crimpausnehmung derart ausgestaltet, dass sie entlang ihrer gesamten Längserstreckung hauptsächlich aus zwei im Wesentlichen ebenen Flächen aufgebaut ist, dass die sie entlang ihrer Längserstreckung konstituierenden Flächen zwischen sich einen beliebigen Winkel von ca. 30° bis ca. 150° einnehmen können, dass sie von einer oder zwei Stirnseitenwänden begrenzt ist und/oder dass sie wannenförmig ausgebildet ist.

Gemäß der Erfindung können zwei Wischerkomponenten bzw. der betreffende Crimpformabschnitt und der zugehörige Rohrabschnitt aus unterschiedlichen Werkstoffen aufgebaut sein, wobei eine einzelne Wischerkomponente einen oder mehr Werkstoffe aufweisen kann. So kann die eine Wischerkomponente bzw. der betreffende Crimpformabschnitt einen Metall- bzw. Leichtmetall-Werkstoff, insbesondere einen Aluminium-Werkstoff, und/oder die andere Wischerkomponente bzw. der betreffende Rohrabschnitt einen Metall-Werkstoff, insbesondere einen Stahl-Werkstoff oder ebenfalls einen Leichtmetall-Werkstoff, aufweisen. Eine Werkstoffpaarung Stahl/Stahl ist natürlich ebenfalls anwendbar.

Ferner kann eine Wischerkomponente bzw. der betreffende Crimpformabschnitt einen Kunststoff-Werkstoff aufweisen, wobei diese Wischerkomponente mit ihrem Verbindungsabschnitt bzw. der betreffende Crimpformabschnitt dann bevorzugt in den betreffenden anderen Verbindungsabschnitt der zweiten Wischerkomponente bzw. den betreffenden Rohrabschnitt eingesteckt ist. Durch einen Einsatz eines Metalltreibers kann eine solche Kunststoffkomponente durch das Verfahren zum Magnetpulscrimpen auch beschleunigt werden und z. B. außen an einem betreffenden Gestänge vorgesehen sein.

Das Magnetpulscrimpen erlaubt es einem Hersteller ein Design der Scheibenwisch-Gestängeeinrichtung derart zu wählen, dass es möglich ist, eine Umform- bzw. Crimpverbindung herzustellen, die unterschiedliche Materialien besitzt. Dadurch können leichtere und hochfeste Materialkombinationen gewählt werden. Beim Magnetpulscrimpen werden oberflächennahe Bereiche des oder der Fügepartner im Makro- und auch im Mikrogefüge nicht verändert. Bei mechanischen Umformverfahren entstehen hierbei üblicherweise Mikrorisse, mechanische Spannungen und Korrosion. Die Verbindung der Wischerkomponenten kann dabei einfach aufgebaut sein und bei kleinen Abmessungen robust und kostengünstig eingerichtet werden.

### Kurzbeschreibung der Figuren

Die Erfindung wird im Folgenden anhand von Ausführungsbeispielen unter Bezugnahme auf die beigefügte Zeichnung näher erläutert. In den schematischen Figuren der Zeichnung zeigen:
- Fig. 1: in einer zweidimensionalen Querschnittsansicht ein weggesteuertes mechanisches Festlegen zweier Wischerkomponenten, unter zu Hilfenahme zweier Crimpstempel;

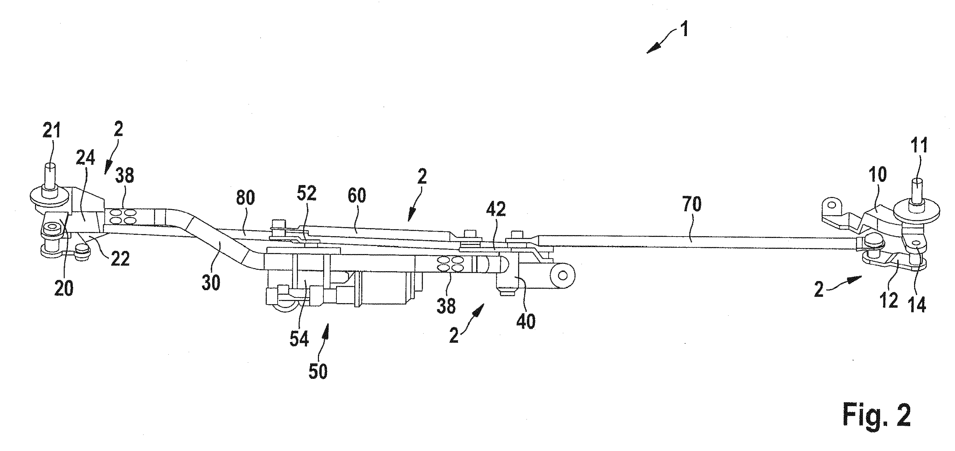

- Fig. 2: in einer perspektivischen Darstellung eine erfindungsgemäße Wischeranlage für eine Scheibenwischvorrichtung für eine Windschutzscheibe eines Kraftfahrzeugs;
- Fig. 3: in einer zweidimensionalen Querschnittsansicht zwei erfindungsgemäß aneinander festgelegte Wischerkomponenten; und
- Fig. 4: die erfindungsgemäß aneinander festgelegten Wischerkomponenten aus der Fig. 3 in einer zweidimensionalen Seitenansicht.

### Ausführungsformen der Erfindung

Eine in Fig. 1 dargestellte Wischeranlage 1 für eine Scheibenwischvorrichtung für ein Kraftfahrzeug umfasst eine Mehrzahl von Scheibenwisch-Gestängeeinrichtungen 2, nachfolgend als Gestängeeinrichtungen 2 bezeichnet, wobei in jeder Gestängeeinrichtung 2 wenigstens zwei Wischerkomponenten 10, 20, 30, 40, 50, 60, 70, 80 der Wischeranlage 1 zusammengefasst sind. Eine bevorzugt zentrale Wischerkomponente 30 der Wischeranlage 1 ist ein den Gegebenheiten des betreffenden Kraftfahrzeugs entsprechend angepasstes Trägerrohr 30, mittels welchem die anderen Wischerkomponenten 10, 20, 40, 50, 60, 70, 80 wenigstens teilweise gehaltert bzw. an dieses mechanisch angebunden sind.

Im vorliegenden Ausführungsbeispiel ist an einem Längsendabschnitt des Trägerrohrs 30 eine Lagereinrichtung 20, insbesondere ein innerhalb des Kraftfahrzeugs festlegbares Wischerlager 20, und an einem diesen gegenüberliegenden Längsendabschnitt eine Lagereinrichtung 40, insbesondere eine innerhalb des Kraftfahrzeugs festlegbare Schubstangen-Lagereinrichtung 40, festgelegt. In einem Mittenabschnitt des Trägerrohrs 30 ist ein elektrischer Antriebsmotor 50 an diesen mittels eines Halters geklemmt. Eine Lagereinrichtung 10, die bevorzugt ebenfalls als ein innerhalb des Kraftfahrzeugs festlegbares Wischerlager 10 ausgebildet ist, ist der Lagereinrichtung 20 an einem gegenüberliegenden Ende der Wischeranlage 1 vorgesehen.

Im vorliegenden Ausführungsbeispiel ist die Lagereinrichtung 10 nicht direkt mit dem Trägerrohr 30 verbunden, sondern wird ausschließlich an einer Karosserie des Kraftfahrzeugs festgelegt. Andere Ausführungsformen, z. B. eine solche bei der die Lagereinrichtung 10 am Träger 30 festlegbar ist, sind natürlich anwendbar. Hierbei können insbesondere die beiden Wischerlager 10, 20 über das Trägerrohr 30 miteinander mechanisch fest verbunden sein. D. h. es kann wenigstens eine, aber auch zwei oder sogar drei der Lagereinrichtungen 10, 20, 40 direkt an der Karosserie des Kraftfahrzeugs festgelegt werden. Das Trägerrohr 30 übernimmt dementsprechend dann andere mechanische Verbindungsaufgaben oder ist in manchen Ausführungsformen obsolet.

Der ggf. mit einem Getriebe versehene, am Trägerrohr 30 montierte elektrische Antriebsmotor 50 treibt in seinem Betrieb eine Abtriebskurbel 52 an, welche über eine Schubstange 60 eine auf der Schubstangen-Lagereinrichtung 40 dreh- oder schwenkbar gelagerte Koppelschwinge 42 zu einer pendelnden Bewegung antreibt. Auf der Koppelschwinge 42 sind zwei Schubstangen 70, 80 montiert, die in voneinander wegweisende Richtungen jeweils eine Antriebsschwinge 12, 22 einer Wischerwelle 11, 21 des betreffenden Wischerlagers 10, 20 pendelnd antreiben. Die Schubstangen 60, 70, 80 zusammen mit der Abtriebskurbel 52, der Koppelschwinge 42 und den Antriebsschwingen 12, 22 bilden dabei ein Übertragungsgestänge für die Wischeranlage 1. Auf der jeweiligen Wischerwelle 10, 20 ist ein Wischerblatt (in der Zeichnung nicht dargestellt) montierbar.

Gemäß der Erfindung soll eine alternative Verbindung zweier Wischerkomponenten 10, 20, 30, 40, 50, 60, 70, 80 - also innerhalb einer Gestängeeinrichtung 2-der Wischeranlage 1, insbesondere des Trägerrohrs 30 mit einer Lagereinrichtung 10, 20, 40 bzw. dessen Gehäuse 14, 24, und/oder einem elektrischen Antriebsmotor 50 bzw. dessen Gehäuse 54, zur Verfügung gestellt werden. Wie oben schon dargelegt soll dabei auf eine Crimpverbindung mittels Crimpstempeln 110 (siehe Fig. 1) verzichtet werden können. Ein direktes Schweißverfahren, wie ein z. B. Widerstands-Schweißverfahren, eignet sich hierfür nicht, da z. B. das Trägerrohr 30 meist aus einem Stahl-Werkstoff und die Lagereinrichtung 10, 20, 40 bzw. dessen Gehäuse 14, 24 oder ein entsprechender Montageabschnitt des Antriebsmotors 50 bzw. dessen Gehäuse 54 aus einem Aluminium-Werkstoff gefertigt ist und sich diese beiden Materialien derart nicht verschweißen lassen. Darüber hinaus ist eine zu verschweißende Fläche bei einer Steckverbindung zwischen dem Trägerrohr 30 und der Lagereinrichtung 10, 20, 40 bzw. dem Antriebsmotor 50 zu klein. Ein indirektes Verfahren, wie z. B. Hartlöten eignet sich ebenfalls nicht, da das Hartlot einen deutlich geringeren Schmelzpunkt aufweisen muss als die beteiligten Werkstoffe, was zu einer reduzierten Festigkeit der Verbindung führt. Darüber hinaus ist die Anwendung dieses Verfahrens auf vorliegenden Gegenstand zu kostenintensiv.

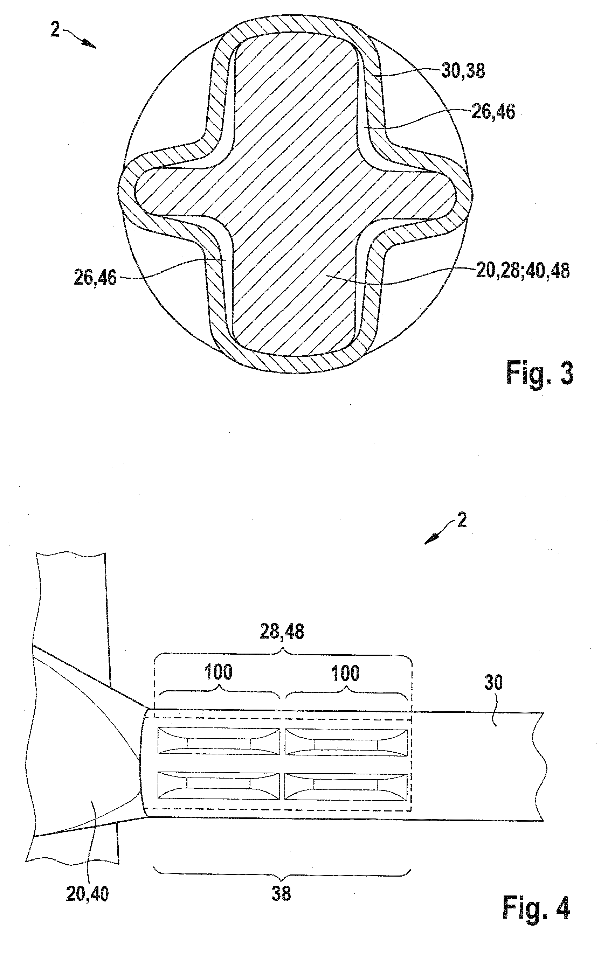

Diese Nachteile werden mittels einer formschlüssigen mechanischen Verbindung vermieden, die z. B. mittels einer Magnetpulscrimpung herstellbar ist bzw. durch ein Verfahren zum Magnetpulscrimpen hergestellt wird. Ein für dieses Verfahren zur Verfügung stehender Verformbereich ist vergleichsweise groß, wodurch eine stabile Formschlussverbindung 100 entsteht, die ferner mit einer reib- bzw. kraftschlüssigen Pressverbindung kombiniert sein kann. Der Herstellungsprozess ist schnell und kostengünstig, und mit einer guten mechanischen Stabilität der beteiligten Wischerkomponenten 10, 20, 30, 40, 50, 60, 70, 80 ergibt sich die belastbare, stabile und dauerfeste mechanische Formschlussverbindung 100. Ein solcher formschlüssiger Verbindungsbereich 100 ist in den Fig. 3 bis 5 dargestellt; siehe weiter unten.

Bei der erfindungsgemäßen Anwendung des Verfahrens zum Magnetpulscrimpen wird eine betreffende Wandung einer Wischerkomponente 10, 20, 30, 40, 50, 60, 70, 80, eine Montagehülse (in der Zeichnung nicht dargestellt) oder ein Treiber (ebenfalls in der Zeichnung nicht dargestellt), radial nach innen oder radial nach außen auf einen Verbindungsabschnitt der anderen Wischerkomponente 10, 20, 30, 40, 50, 60, 70, 80 derart beschleunigt, dass sich in einem gemeinsamen Bereich unter einer plastischen Umformung der beschleunigten Wandung der Wischerkomponente 10, 20, 30, 40, 50, 60, 70, 80 bzw. der Montagehülse die Formschlussverbindung 100 zwischen den betreffenden Werkstoffen ausbildet, wobei die Wandung der einen Wischerkomponente 10, 20, 30, 40, 50, 60, 70, 80 bzw. die Montagehülse in wenigstens eine Crimpausnehmung des Verbindungsabschnitts der anderen Wischerkomponente 10, 20, 30, 40, 50, 60, 70, 80 bereichsweise eindringt und dort dauerhaft verbleibt. Durch einen entstehenden Formschluss und einer zumindest teilweise flächigen Verbindung können auftretende mechanische Kräfte sehr gut übertragen werden. Dies gilt für eine Axial-, eine Biege-, eine Torsions- oder auch eine zusammengesetzte mechanische Beanspruchung. Ein Einrichten einer solchen Formschlussverbindung 100 wird anhand der Fig. 3 und 4 näher erläutert.

Die folgenden Ausführungen beziehen sich nur noch auf Wischerkomponenten 30; 20, 40. Diese Ausführungen sind jedoch analog auf die Wischerkomponenten 10, 50, 60, 70, 80 oder auch auf andere, z. B. in der Zeichnung nicht dargestellte Wischerkomponenten anwendbar. Gemäß der Erfindung - siehe Fig. 3 und 4-werden zwei Wischerkomponenten 30; 20, 40 mit ihren betreffenden Verbindungsabschnitten - einem Rohrabschnitt 38 und einem Crimpformabschnitt 28, 48 -, also deren Längsendabschnitten, im Wesentlichen koaxial ineinander gesteckt, wobei diese Anordnung innerhalb einer Magnetpuls-Umformspule (in der Zeichnung nicht dargestellt), die bevorzugt als eine Kompressionsspule ausgebildet ist, eingerichtet wird. Nach einer kurzeitigen Bestromung der Magnetpuls-Umformspule 100 mit Wechselstrom, induziert ein Wechselmagnetfeld der Magnetpuls-Umformspule 100 in der äußeren Wischerkomponente 30 bzw. deren Verbindungsabschnitt einen gegenläufigen Wechselstrom, der wiederum ein dem ersten Wechselmagnetfeld entgegengesetztes Wechselmagnetfeld induziert.

Durch die beiden sich abstoßenden Wechselmagnetfelder ergibt sich mit der festgelegten Magnetpuls-Umformspule eine radial nach innen gerichtete Kraft, welche den Rohrabschnitt 38 der äußeren Wischerkomponente 30 sehr schnell auf den Crimpformabschnitt 28, 48 der inneren Wischerkomponente 20, 40 beschleunigt. Hierbei verformt sich der Rohrabschnitt 38 in wenigstens eine Crimpausnehmung 26, 46 des Crimpformabschnitts 28, 48 derart plastisch, dass er einen dauerhaften Pressverbund (Formschlussverbindung 100) mit dem Crimpformabschnitt 28, 48 eingeht, was in den Fig. 3 und 4 dargestellt ist. Hierbei kann der Crimpformabschnitt 28, 48 ein Montagezapfen, der z. B. aus einem Vollmaterial besteht, oder auch ein Rohrabschnitt sein. Bevorzugt ist ein Werkstoff des Crimpformabschnitts 28, 48 ein Metall-Werkstoff, wie z. B. ein Leichtmetall- oder ein Stahl-Werkstoff. Ferner kann der Crimpformabschnitt 28, 48 einen Kunststoff-Werkstoff aufweisen oder auch aus einem Verbund-Werkstoff aufgebaut sein. Des Weiteren ist der Rohrabschnitt 38 innen hohl ausgestaltet, wobei dieser einen Metall-Werkstoff, wie z. B. einen Leichtmetall- oder einen Stahl-Werkstoff, aufweist. Bei Verwendung eines Treibers (siehe unten) kann bei einer Konfiguration nach den Fig. 3 und 4 der Rohrabschnitt 38 auch einen elektrisch nicht leitenden Werkstoff, wie z. B. einen Kunststoff-Werkstoff, oder einen elektrisch schlecht leitenden Werkstoff aufweisen.

Mit der Verwendung einer Expansionsspule (in der Zeichnung nicht dargestellt) kann das Vorgehen natürlich auch kinematisch umgekehrt werden, wobei der innenliegende Abschnitt der betreffenden Wischerkomponente mittels der darin angeordneten Expansionsspule aufgeweitet wird und entsprechend ein Formschluss mit der äußeren Wischerkomponente eingerichtet wird. Ferner kann, insbesondere bei elektrisch vergleichsweise schlecht leitenden Werkstoffen ein äußerer (Kompressionsspule) oder innerer Treiber (Expansionsspule) aus einem elektrisch vergleichsweise gut leitenden Werkstoff verwendet werden. Dies ist z. B. auch bei der Verwendung einer Wischerkomponente vorteilhaft, die Kunststoff aufweist. In gewisser Weise ist die als Montagehülse ausgebildete Wischerkomponente ein solcher Treiber.

Die Fig. 3 und 4 zeigen zwei Wischerkomponenten 30; 20, 40, wobei der Crimpformabschnitt 28, 48 der inneren Wischerkomponente 20, 40 in einen Rohrabschnitt 38 der äußeren Wischerkomponente 30 eingesteckt ist. Die beiden Wischerkomponenten 30; 20, 40 sind über die erfindungsgemäße Formschlussverbindung 100 aneinander festgelegt, wodurch eine Zwei-Wischerkomponenten-Verbindung entstanden ist. Die zueinander in Bezug auf ihre betreffenden Durchmesser korrespondierenden Verbindungsabschnitte der Wischerkomponenten 30; 20, 40 können dabei wiederum als ein Montagezapfen und ein Rohrabschnitt, oder jeweils als ein Rohrabschnitt (in der Zeichnung nicht dargestellt) ausgebildet sein. In der Fig. 4 ist links ein Montagezapfen bzw. ein Crimpstutzen und rechts bzw. radial darüber ein Rohrabschnitt 38 der betreffenden Wischerkomponente 30, 40 dargestellt.

Ferner können zwei Wischerkomponenten 20, 40 mithilfe einer dritten Wischerkomponente, der Montagehülse, aneinander festgelegt sein (in der Zeichnung nicht dargestellt). Hierbei entsteht eine Drei-Wischerkomponenten-Verbindung.

Die innerhalb der Montagehülse angeordneten Crimpformabschnitte 28, 48 der Wischerkomponenten 20, 40 können dabei wiederum als (ein) Montagezapfen bzw. Crimpstutzen und/oder als (ein) Rohrabschnitt/e ausgebildet sein. Bevorzugt ist dabei die Montagehülse als ein vergleichsweise kurzes Rohrstück ausgebildet, innerhalb welchem die beiden Crimpformabschnitte 28, 48 der Wischerkomponenten 20, 40 vorgesehen sind.

Gemäß der Erfindung stellt sich eine Formschlussverbindung ein, die in Alleinstellung ausreichen würde, die beiden Wischerkomponenten 30; 20, 40 aneinander festzulegen. Zu dem Formschluss kommt jedoch meist noch ein Kraft- oder Reibschluss hinzu, der sich meist an den radial äußeren Bereichen der gegenseitigen Verbindung der beiden Wischerkomponenten 30; 20, 40 einrichtet. Hierbei tritt der Kraft- bzw. Reibschluss dort auf, wo sich eine Innenwand des Rohrabschnitts 38 und der Crimpformabschnitt 28, 48 berühren. Mittels zweier einander gegenüberliegender Berührbereiche entsteht dann die Kraft- bzw. Reibschlussverbindung zwischen den beiden Wischerkomponenten 30; 20, 40.

Bei der formschlüssigen Verbindung ist eine der Wischerkomponenten 30; 20, 40 einer anderen "im Weg". Bei einer Belastung wirken Druckkräfte normal, das heißt rechtwinklig zu den betreffenden Flächen der beiden Wischerkomponenten 30; 20, 40. Eine solche "Sperrung etabliert sich gemäß der Erfindung in wenigstens zwei Rotationsrichtungen, nämlich bevorzugt um den Crimpformabschnitt 28, 48 herum. Ferner ist es bevorzugt dass hierbei ebenfalls wenigstens eine, jedoch bevorzugt zwei translatorische Richtungen, nämlich in Längsrichtung des Crimpformabschnitts 28, 48, gesperrt sind. Dies erfolgt mittels einer bzw. zwei Stirnseitenwänden wenigstens einer Crimpausnehmung 26, 46. Eine kraftschlüssige Verbindung setzt eine Normalkraft auf die miteinander verbundenen Wischerkomponenten 30; 20, 40 voraus. Ihre gegenseitige Verschiebung ist solange verhindert, bis eine durch die Haftreibung aus dem Pressverbund der beiden Wischerkomponenten 30; 20, 40 bewirkte Gegenkraft nicht überschritten wird.

Das Verfahren des Magnetpulsumformens/-crimpens bzw. das Magnetpulsumformen/-crimpen ist ein berührungsloses Umform- bzw. Fügeverfahren, mit welchem eine partielle Umformung bzw. Durchmesserreduzierung (Kompressionsspule) oder -erhöhung (Expansionsspule) möglich ist. Durch eine Geometrieänderung eines Fügepartners ist es möglich, einen flächigen Formschluss zu erzielen, wobei ein höheres Grenzumformvermögen als mit nicht berührungslosen mechanischen Verfahren erzielbar ist. Ferner ist das Verfahren des Magnetpulsumformens bzw. das Magnetpulsumformen ist ferner unter den Namen Elektromagnetische Puls Technologie (EMPT), Magnetumformung, Elektromagnetische Umformung (EMU) oder auch als Magnetimpulsumformung bekannt.

## Patentansprüche

1. Scheibenwisch-Gestängeeinrichtung für eine Scheibenwischvorrichtung oder eine Wischeranlage (1) eines Fortbewegungsmittels, insbesondere eines Kraftfahrzeugs, mit zwei Wischerkomponenten (30; 20, 40), **dadurch gekennzeichnet,**
**dass** die zwei Wischerkomponenten (30; 20, 40) der Scheibenwisch-Gestängeeinrichtung (2) im Wesentlichen formschlüssig mittels einer Magnetpulscrimpung aneinander festgelegt sind.

2. Verfahren zum Herstellen einer Scheibenwisch-Gestängeeinrichtung für eine Scheibenwischvorrichtung oder eine Wischeranlage (1) eines Fortbewegungsmittels, insbesondere eines Kraftfahrzeugs, mit zwei Wischerkomponenten (30; 20, 40), **dadurch gekennzeichnet,**
**dass** die zwei Wischerkomponenten (30; 20, 40) der Scheibenwisch-Gestängeeinrichtung (2) im Wesentlichen formschlüssig durch Magnetpulscrimpen aneinander festgelegt werden.

3. Scheibenwisch-Gestängeeinrichtung oder Herstellungsverfahren gemäß Anspruch 1 oder 2, **dadurch gekennzeichnet, dass** die eine Wischerkomponente (20, 40) einen Crimpformabschnitt (28, 48) und die andere Wischerkomponente (30) einen Rohrabschnitt (38) aufweist, wobei
der Rohrabschnitt (38) der einen Wischerkomponente (30) auf den Crimpformabschnitt (28, 48) der anderen Wischerkomponente (20, 40) gesteckt ist und der Rohrabschnitt (38) mittels der Magnetpulscrimpung auf den Crimpformabschnitt (28, 48) gecrimpt ist bzw. durch Magnetpulscrimpen auf den Crimpformabschnitt (28, 48) gecrimpt wird.

4. Scheibenwisch-Gestängeeinrichtung oder Herstellungsverfahren gemäß einem der Ansprüche 1 bis 3, **dadurch gekennzeichnet, dass** ein, mehrere oder im Wesentlichen alle Querschnitte einer einzelnen Crimpausnehmung (26, 46) des Crimpformabschnitts (28, 48):
• im Wesentlichen radial von innen nach außen verlaufen,
• sich in Radialrichtung von innen nach außen aufweiten,
• keine parallelen Begrenzungslinien besitzen,
• in einer beliebigen Umfangs- und/oder Radialrichtung hinterschneidungsfrei ausgebildet sind,
• im Wesentlichen wenigstens teilweise segment- und/oder sektorförmig sind, und/oder
• untereinander identisch sind, wobei sich ihre Lage in einer Längserstreckung des Crimpformabschnitts (28, 48) bevorzugt nicht ändert.

5. Scheibenwisch-Gestängeeinrichtung oder Herstellungsverfahren gemäß einem der Ansprüche 1 bis 3, **dadurch gekennzeichnet, dass** ein, mehrere oder im Wesentlichen alle Querschnitte des Crimpformabschnitts (28, 48) in einem formschlüssigen Verbindungsbereich (100):
• in einer Umfangs- und/oder Radialrichtung hinterschneidungsfrei ausgebildet sind,
• wenigstens angenähert stern- oder kreuzförmig aufgebaut sind,
• die Form eines regelmäßigen oder unregelmäßigen Vielecks besitzen,
• kreisförmig, ellipsenförmig oder wenigstens teilweise abgerundet ausgebildet sind,
• im Wesentlichen punkt- und/oder spiegelsymmetrisch bezüglich eines Zentrums des Querschnitts sind, und/oder
• untereinander identisch sind, wobei sich ihre Lage in der Längserstreckung des Crimpformabschnitts (28, 48) bevorzugt nicht ändert.

6. Scheibenwisch-Gestängeeinrichtung oder Herstellungsverfahren gemäß einem der Ansprüche 1 bis 4, **dadurch gekennzeichnet, dass** die einzelne Crimpausnehmung (26, 46) in Längsrichtung des Crimpformabschnitts (28, 48) :
• entlang ihrer gesamten Längserstreckung hauptsächlich aus zwei im Wesentlichen ebenen Flächen aufgebaut ist,
• die die Crimpausnehmung (26, 46) entlang ihrer Längserstreckung konstituierenden Flächen zwischen sich einen Winkel von ca. 30° bis ca. 150°, bevorzugt einen Winkel von ca. 45° bis 120° oder insbesondere einen Winkel von ca. 60° bis ca. 90° aufspannen,
• von einer oder zwei Stirnseitenwänden begrenzt ist, und/oder
• wannenförmig ausgebildet ist.

7. Scheibenwisch-Gestängeeinrichtung oder Herstellungsverfahren gemäß einem der Ansprüche 1 bis 5, **dadurch gekennzeichnet, dass** die Wischerkomponenten (30; 20, 40) bzw. der betreffende Crimpformabschnitt (28, 48) und der zugehörige der Rohrabschnitt (38) aus unterschiedlichen Werkstoffen aufgebaut sind, wobei eine einzelne Wischerkomponente (30; 20, 40) aus einem oder mehr Werkstoffen aufgebaut sein kann.

8. Scheibenwisch-Gestängeeinrichtung oder Herstellungsverfahren gemäß einem der Ansprüche 1 bis 6, **dadurch gekennzeichnet, dass** die eine Wischerkomponente (20, 40) bzw. der betreffende Crimpformabschnitt (28, 48) einen Metall-Werkstoff, insbesondere Leichtmetall-Werkstoff, z. B. einen Aluminium-Werkstoff, und/oder die andere Wischerkomponente (30) bzw. der betreffende Rohrabschnitt (38) einen Metall-Werkstoff, insbesondere einen Stahl-Werkstoff oder Leichtmetall-Werkstoff, aufweist.

9. Scheibenwisch-Gestängeeinrichtung oder Herstellungsverfahren gemäß einem der Ansprüche 1 bis 7, **dadurch gekennzeichnet, dass** die eine Wischerkomponente (20, 40) bzw. der betreffende Crimpformabschnitt (28, 48) einen Kunststoff-Werkstoff aufweist, wobei diese Wischerkomponente (20, 40) mit ihren Crimpformabschnitt (28, 48) in den betreffenden Rohrabschnitt (38) der anderen Wischerkomponente (30) eingesteckt ist.

10. Scheibenwisch-Gestängeeinrichtung oder Herstellungsverfahren gemäß einem der Ansprüche 1 bis 7, **dadurch gekennzeichnet, dass** die Wischerkomponente (30; 20, 40) eine Lagereinrichtung (20, 40), insbesondere ein Wischerlager (20), eine Schubstangen-Lagereinrichtung (40); ein Trägerrohr (30); ein elektrischer Antriebsmotor, ggf. mit einem Getriebe; ein Gehäuse oder eine Montagevorrichtung, insbesondere eine Montagehülse ist.

11. Scheibenwischvorrichtung oder Wischeranlage für ein Fortbewegungsmittel, insbesondere für eine Windschutzscheibe eines Kraftfahrzeugs, **dadurch gekennzeichnet, dass** eine Scheibenwisch-Gestängeeinrichtung (2) der Scheibenwischvorrichtung bzw. der Wischeranlage (1) nach einem der Ansprüche 1 bis 10 ausgebildet oder nach einem der Ansprüche 2 bis 10 hergestellt ist.
